# EUROPEAN PATENT SPECIFICATION

(11) **EP 3 339 458 B1**
(45) Date of publication and mention of the grant of the patent: **08.07.2020**
(21) Application number: 15828474.5
(22) Date of filing: 25.05.2015
(51) Int. Cl.: C22C 29/18, F01D 5/28, F01D 25/00, B22F 5/04

(54) **NIOBIUM SILICIDE-BASED COMPOSITE MATERIAL, HIGH-TEMPERATURE COMPONENT USING SAME, AND HIGH-TEMPERATURE HEAT ENGINE**
VERBUNDSTOFF AUF BASIS VON NIOB-SILICID, HOCHTEMPERATURKOMPONENTE DAMIT UND HOCHTEMPERATURWÄRMEKRAFTMASCHINE
MATÉRIAU COMPOSITE À BASE DE SILICIURE DE NIOBIUM, ÉLÉMENT RÉSISTANT AUX HAUTES TEMPÉRATURES L'UTILISANT ET MOTEUR THERMIQUE À HAUTE TEMPÉRATURE

(43) Date of publication of application: 27.06.2018
(73) Proprietor: Mitsubishi Hitachi Power Systems, Ltd., Yokohama-shi, Kanagawa 220-8401 (JP)
(72) Inventor: WANG, Yuting, Yokohama-shi Kanagawa 220-8401 (JP)
(74) Representative: Beetz & Partner mbB
(86) International application number: PCT/JP2015/064880
(87) International publication number: WO 2016/189612

(56) References cited:
- WO-A1-2014/073029
- WO-A1-2015/079558
- JP-A- 2007 031 837
- JP-A- 2012 132 099
- US-A1- 2002 104 595
- US-B1- 6 409 848

## Description

### Technical Field

The present invention relates to Nb-silicide based composites (Nb-silicide based metal/intermetallic compound composite), and a high-temperature component and to high-temperature heat engines which employ the same.

### Background Art

High temperature technologies make a significant contribution to the improvement of thermal efficiency of heat engines such as gas turbines. Meanwhile, the development of high-temperature heat resistant materials plays a key role. Presently, gas turbine components mainly employ a nickel (Ni) based superalloy. However, such an alloy is approaching the limit of the increase in heatproof temperature. That is, it is almost impracticable to further increase the heatproof temperature of the superalloy.

A novel high-temperature heat resistant material for improvement of thermal efficiency is required of higher heatproof temperature than that of the conventional Ni based superalloy (melting point on the order of 1300°C). Reflecting on the evolution of the conventional Ni based superalloy, the superalloy has been improved in material characteristics by the innovation and advancement (unidirectional solidification, single-crystal superalloy and the like) of production techniques.

However, the most important and essential characteristic for the next generation high-temperature heat resistant material is high melting point. Therefore, the most realistic option for essentially achieving the increase of the heatproof temperature is to develop a material based on a high melting point metal.

So-called high melting point metals having melting points over 2000°C such as tungsten (W), molybdenum (Mo), niobium (Nb) and tantalum (Ta) are considered to meet the above requirement. Of them, Nb in particular has a melting point more than 1000°C higher than that of Ni, better room temperature toughness than ceramics, and low density (8.57 g/cm3) . From the viewpoint of high-temperature strength and room temperature toughness, however, there still exist some difficulties in putting Nb into practical use as a heat resistant material. This leads to necessity of developing an alloy enhanced in these characteristics.

In this connection, a variety of studies have been made on intermetallic compounds such as Nb-Al based intermetallic compound, solid solution-reinforced type Nb based alloys, precipitation-reinforced or dispersion-reinforced type Nb based composites.

As the Nb-Al based intermetallic compound, Nb₃Al having an A15 type crystal structure receives attention. Nb₃Al is very brittle at around room temperature and hence, a proposal was made in Japanese Unexamined Patent Application Publication No. Hei 6-122935 to improve the room temperature toughness and high-temperature strength through addition of W, Ta as a tertiary element. Unfortunately, it is quite difficult to achieve a notable improvement of the basic property of the hard and brittle intermetallic compound. It is not easy to make the intermetallic compound fit for practical use.

An example of the solid solution-reinforced Nb based alloy known from Japanese Unexamined Patent Application Publication No. 2001-226732 is an alloy containing 5 to 30 at% of Mo and 5 to 15 at% of W. However, the addition of the solid solution-reinforcing elements Mo and W does not go far enough to yield sufficient strength in a high temperature region.

Further, an example of a Nb-silicide based composite known from Japanese Unexamined Patent Application Publication No. 2001-226734 is a Nb-Si based composite material prepared by admixing Nb with 5 to 20 at% of Si, 5 to 30 at% of Mo, and 5 to 15 at% of W followed by reinforcement through niobium silicide precipitation. This material is a niobium based composite material which includes niobium silicide as a dispersed phase mainly composed of Nb₅Si₃ and has a network structure where the niobium silicide molecules are coupled together. Because of a large amount of niobium silicide, this composite material has high strength at high temperatures. However, niobium silicide is essentially brittle, and with respect to its network structure, the composite material cannot stop crack propagation and suffer further brittleness at room temperatures.

A Nb-silicide based composite used for turbine components and comprising Ti, Hf, Si, Al and Cr and, optionally, B, W, Sn and Mo is known from US 2002/104595 A1.

Titanium (Ti) improves intrinsic toughness of a metal phase. According to U.S. Patent No. 5833773, therefore, Ti is admixed in an amount in the range of about 24 to 27 at% based on the total amount of the composite material. Although the composite material can be increased in toughness, production of Ti₅Si₃ is encountered in a temperature range of 1000 to 1400°C, resulting in the degradation of structural stability and mechanical characteristics (creep strength, fatigue and the like). Therefore, the addition of high concentration Ti cannot achieve both the improvement in toughness (ductility) and the improvement in high-temperature strength of the composite material. Further, the presence of high concentration Ti may sometimes tend to induce undesired titanium segregation during a casting process, namely titanium segregation in a melt during solidification.

### Summary of Invention

### Technical Problem

The present invention has an object to provide Nb-silicide based composites achieving both high mechanical characteristics and toughness in an ultrahigh temperature region (1200°C or more) as well as a high-temperature component and a high-temperature heat engine which employ the same.

### Solution to Problem

For achieving the above object, the present invention provides a Nb-silicide based composite including 13 to 23 at% of Si, 2.0 to 10 at% of Cr, 5.0 to 23 at% of Ti, 0.0 to 6.0 at% of Al, 0.10 to 8.0 at% of Zr, 1.0 to 8.0 at% of Hf, 0.0 to 2.0 at% of W, 0.10 to 6.0 at% of Sn, 3.1 to 8.0 at% of Mo, 0.20 to 5.0 at% of B, and the balance including Nb with inevitable impurities.

The present invention further provides a high-temperature component and a high-temperature heat engine which employ the above Nb-silicide based composite.

### Advantageous Effects of Invention

The present invention can provide the Nb-silicide based composites adapted to achieve both the mechanical characteristics and the toughness at high levels in an ultrahigh temperature region (1200°C or more) as well as the high-temperature component and the high-temperature heat engine which employ the same.

### Brief Description of Drawing

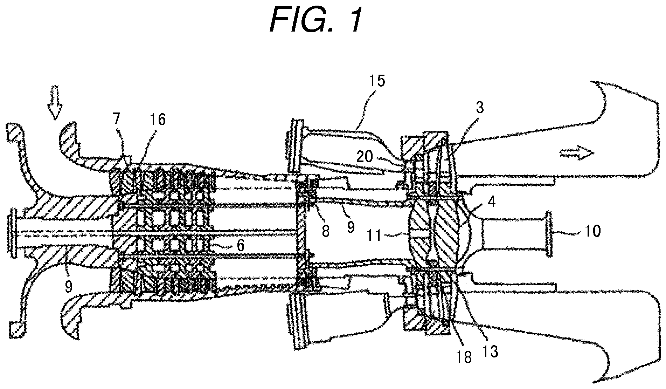

[Fig. 1] Fig. 1 is a sectional view schematically showing an example of a gas turbine employing a Nb-silicide based composite according to the present invention.

### Description of Embodiments

### [Basic Concept of Invention]

With an aim to achieve the above object, the present inventors have investigated on Nb-silicide based composites which are adapted to balance individual alloying-element additives, to maintain high melting points, and to be improved in room temperature toughness. The inventors have found that both the strength and toughness can be improved on the basis of structure control by suitable element addition for improving the toughness of a Nb phase, followed by a heat treatment suitably combined with the additive element. More specifically, the inventors have found that both the high-temperature strength and the room temperature toughness can be improved by forming a combination of niobium based crystal grains rich in ductility (granular niobium crystal) and a microstructure having high-temperature strength (e.g., lamellar structure) and subjecting the resultant combination to a suitable heat treatment. The present invention was invented based on the knowledge we found as above.

Ti has the effect of improving the intrinsic toughness of a metallic niobium phase. Putting a high value on phase stability of alloy at high temperatures (1000°C to 1400°C) based on thermodynamic calculation results, the inventors propose the Nb-silicide based composite which contains the additive elements (Hf, Zr, Al, W, Mo and the like) in the above-described amounts so as to be free from precipitation of Ti₅Si₃, Ti₃Si phase and the like and to include a single reinforcing phase of Nb₅Si₃ in large part.

The present invention is described in detail as below. It is noted, however, that the present invention is not limited to the following embodiments but suitable modifications and changes may be made thereto without departing from the scope of the present invention.

### [Nb-Silicide Based Composite]

Now, description is made as below on actions and favorable composition ranges of the additive elements contained in the Nb-silicide based composite according to the present invention that has the above-described structure. It is noted that the term "niobium crystal" used herein includes the crystal of simple niobium (Nb) and the crystal of niobium solid solution. Further, "Nb silicide" may include any compounds that contain niobium and silicon. Particular limitations are not placed on the other compositions and the like.

### Si (Silicon) : 13 to 23 at (atomic) %

A Nb-Si based binary alloy has a eutectic point in the vicinity of 18.7 at% Si as seen in a phase diagram thereof. In the vicinity of the eutectic point, the niobium phase having high toughness at room temperatures is prone to form a continuous phase. When a Si content is less than 13 at%, the alloy is short of high-temperature strength because of the small amount of a silicide phase (reinforcing phase). When the Si content is more than 23 at%, on the other hand, the alloy contains much silicide phase so as to form a hard, brittle material, thus failing to ensure toughness. The Si content is desirably in the above-described range because addition of another element may cause the deviation of the eutectic point. The Si content is more preferably in the range of 14 to 20 at% (14 at% or more and 20 at% or less), and even more preferably of 15 to 19 at%.

### Cr (Chromium): 2.0 to 10 at%

Previous studies indicate that the composite material can be improved in the high-temperature strength through solid solution reinforcement. Chromium is an element effective in improving high-temperature oxidation resistance. Further, the composite material can be improved in low-temperature toughness through addition of Cr for coarsening Nb grains. Cr exhibits these effects more notably when Cr is present in an amount of 2.0 at% or more. However, if the Cr content is excessive, the composite material is lowered in toughness because of substantial precipitation of a brittle Laves phase. It is therefore desirable to set an upper limit of Cr amount to 10 at% for balancing with the other elements. The Cr content is more preferably in the range of 5.0 to 10 at%, and even more preferably of 6.0 to 9.0 at%.

### Ti (Titanium): 5.0 to 23 at%

When a Ti content is 5.0 at% or more, Ti is effective in improving the toughness of the Nb-silicide based composite by forming a solid solution with the Nb phase. However, when the amount of Ti added is more than 23 at%, Ti is combined with Si to form silicide (TiSi₃ or Ti₅Si₃) The resultant silicide is brittle and hence, the composite material is lowered in the room temperature toughness. Further, Ti has a low melting point, thus lowering the high-temperature strength of the Nb-silicide based composite by lowering the melting point of the Nb-silicide composite. The Ti content is more preferably in the range of 7.0 to 20 at%, and even more preferably of 9.0 to 19 at%.

### Hf (Hafnium): 1.0 to 8.0 at%

Hf has the effect of increasing the amount of Ti dissolved into the Nb phase by forming a solid solution with Nb₅Si₃. Hf exhibits the effect notably when Hf is present in an amount of 1.0 at% or more. However, if the Hf content is excessive, the composite material is lowered in the toughness and high-temperature strength because of the formation of HfSi₂. It is therefore desirable to set an upper limit of Hf amount to 8.0 at%. The Hf content is more preferably in the range of 2.0 to 6.0 at% and even more preferably of 2.5 to 5.0 at%.

### Al (Aluminum): 0.0 to 6.0 at%

Similarly to Hf, addition of Al is effective to increase the amount of Ti dissolved into the Nb phase. Al exhibits the effect notably when Al is present in an amount of 0.5 at% or more. However, if the amount of Al, which is a low-melting point element, is excessive, Al may possibly lower the melting point of the composite material, thus degrading the high-temperature strength of the composite material. It is therefore desirable to set an upper limit of Al amount to 6.0 at%. The Al content is more preferably in the range of 2.0 to 4.0 at%.

### Zr (Zirconium): 0.10 to 8.0 at%

Addition of Zr is effective to coarsen niobium phase grains by accelerating the rate of eutectoid decomposition of Nb₃Si during the heat treatment process. Zr exhibits the effect notably when Zr is present in an amount of 0.1 at% or more. However, if the Zr content is excessive, the composite material is lowered in the toughness and high-temperature strength because of the formation of silicide (ZrSi₂). It is therefore desirable to set the Zr content to a range of 0.1 to 8.0 at%, more preferably of 1.5 to 5.0 at%, and even more preferably of 2.0 to 4.0 at%.

### Sn (Tin): 0.10 to 6.0 at%

Addition of Sn is effective to suppress pest oxidation of Nb-Si intermetallic compound. Sn exhibits the effect notably when Sn is present in an amount of 0.10 at% or more. However, if the Sn content is excessive, the Nb-silicide based composite is lowered in the melting point so as to be degraded in the high-temperature strength. It is therefore desirable to set an upper limit of Sn amount to 6.0 at%. The Sn amount is more preferably in the range of 0.50 to 5.0 at%, and even more preferably of 1.0 to 4.0 at%.

### W (Tungsten): 0.50 to 2.0 at%, Mo: 3.1 to 8.0 at%

The reason for adding Mo and W in combination as reinforcing elements to be dissolved into Nb is that the combined addition achieves a good balance between the high-temperature strength and the toughness more easily than the addition of either one of these elements. The amount of W+Mo added is more preferably in the range of 6.0 to 8.0 at%. When the total amount of W+Mo is less than 6 at%, the composite material is short of a solute effect. The addition of the high melting point metal W is effective to achieve solid solution reinforcement of the niobium phase. The reason for setting an upper limit of W+Mo amount to 8.0 at% is that the W+Mo amount beyond this limit results in serious degradation of toughness. The W content is more preferably in the range of 0.60 to 2.0 at% and even more preferably of 0.80 to 1.6 at%. The Mo content is more preferably in the range of 3.5 to 7.0 at% and even more preferably of 3.8 to 6.6 at%.

### B (Boron): 0.20 to 5.0 at%

Addition of B is effective to improve the room temperature toughness of the composite material. The addition of B is considered to have a possible effect to improve the strength of phase interface of a Nb crystal/Nb silicide structure, the reason for which is not yet known. Further, the addition of B is also effective to improve the oxidation resistance of the composite material. B exhibits these effects notably when B is present in an amount of 0.20 at% or more. However, an excessive amount of B may cause the composite material to be degraded in the toughness and high-temperature strength because of the formation of NbB₂ through segregation. It is therefore desirable to set an upper limit of B amount to 5.0 at%. The B amount is more preferably in the range of 0.50 to 4.5 at%, and even more preferably of 0.50 to 4.0 at%.

Desirably, the Nb-silicide based composite according to the present invention includes niobium crystal grains and a compound phase containing niobium silicide, and has a morphology where a coarse metallic niobium crystal grain structure having high toughness coexists with a Nb/niobium silicide composite phase with very fine eutectic micro structure (compound phase) having an excellent high-temperature strength.

The amount of niobium crystal grains (coarse niobium crystal grains and niobium based crystal grains) present in the Nb-silicide based composite is preferably in the range of 35 to 65 vol%. Further, the amount of compound phase present in the Nb-silicide based composite is preferably in the range of 35 to 65 vol%. It is noted here that "silicide" means compounds of Si and any of the above-described additive elements and is represented as MSi₃ (M denotes an additive element other than the above Si) .

### Preparation Method of Nb-Silicide Based Composite

A preparation method of Nb-silicide based composite according to the present invention includes the following steps. Specifically, the preparation method includes: a melting step of mixing together a Nb containing material, a Si containing material and a suitable additive element other than the above Nb and Si, followed by melting the resultant mixture; a solidifying step of solidifying the molten mixture obtained by the melting step; and a heat treatment step of heat-treating the solidified mass, in a solid state, which is obtained through the solidifying step. It suffices that the method at least includes: the solidifying step of solidifying the molten mixture obtained by the melting step; and the heat treatment step of heat-treating the solidified mass, in the solid state, which is obtained by the solidifying step. The conditions such as material containing Nb or Si, type of additives, heat-treatment temperatures and manufacturing facilities and instruments are not particularly limited.

The heat-treatment step is a process where the Nb-silicide based composite through the solidifying step is heat treated in the solid state. The heat-treatment step is preferably performed in vacuo or in an inert gas atmosphere and at temperatures of 1200 to 1700°C.

The Nb-silicide based composite resulting from the heat treatment step includes the coarse niobium crystal grains and a Nb/niobium silicide lamellar structure with very fine eutectic micro structure (the structure is composed of a compound phase containing niobium silicide and fine niobium crystal grains dispersed in the compound phase, and both of the above compound phase and niobium crystal grains are also collectively referred to as "the compound phase"). The major part of the niobium silicide is Nb₅Si₃. In a texture structure of this niobium based composite, the compound phase forming the Nb/niobium silicide lamellar structure with very fine eutectic micro structure is formed in a network of the coarse niobium crystal grains. Therefore, cracks formed in the niobium silicide are less prone to propagate. Further, the Nb crystals around the niobium silicide have comparatively high ductility and have higher toughness than the silicide. As a result, the crack propagation in the silicide, which is a foremost concern, is suppressed.

A volume fraction of the niobium crystal grains (the coarse niobium crystal grains) is preferably in the range of 35 to 65 vol% and more preferably of 45 to 60 vol%. It is noted here that the volume fraction of the niobium crystal grains means the percentage of an area of the coarse niobium crystal grains based on the total cross section of the Nb-silicide based composite and is defined as the quotient (in percent) obtained by dividing the difference between the total cross section and the area of the niobium silicide phase, the lamellar structure and the like exclusive of the niobium crystal grains by the total cross section. The area percentage of each phase can be evaluated based on SEM (Scanning Electron Microscope) images for cross-sectional observation.

On the other hand, the Nb/niobium silicide lamellar structure with very fine eutectic micro structure is considered to improve the high-temperature strength. The size of the lamellar structure is not particularly limited but the finer the structure the better. A volume fraction of the lamellar structure (compound phase) is preferably in the range of 35 to 65 vol% and more preferably of 45 to 55 vol%. It is noted here that the volume fraction of the lamellar structure means the area percentage of the lamellar structure based on the total cross section of the Nb-silicide based composite. An evaluation method for the area percentage of the lamellar structure is the same as that for the above-described niobium crystal grains. The term "lamellar structure" as used herein is a generic term of the portion other than the niobium crystal grains and hence, includes not only the lamellar structure but also the other fine structures.

Besides the primary phase (niobium crystal grains and lamellar structure) after the heat treatment, the composite material may also contain a non-primary phase (Laves phase, Hf₂Si phase and the like) having a small precipitation amount. However, the content of the non-primary phase is preferably 5 vol% or less. If the content of the non-primary phase exceeds 5 vol%, the amount of the primary phase is reduced so that the composite material fails to achieve sufficient high-temperature strength and toughness.

### [High-Temperature Component and High-Temperature Heat Engine]

Fig. 1 is a sectional view schematically showing an example of a gas turbine employing the Nb-silicide based composite according to the present invention. The numerals assigned to components shown in Fig. 1 indicate as follows. 10 denotes a turbine stub shaft, 3 denotes a turbine blade, 13 denotes a turbine stacking bolt, 18 denotes a turbine spacer, 19 denotes a distant piece, 20 denotes a first stage nozzle, 6 denotes a compressor disk, 7 denotes a compressor blade, 16 denotes a compressor nozzle, 8 denotes a compressor stacking bolt, 9 denotes a compressor stub shaft, 4 denotes a turbine disk, 11 denotes a hole, and 15 denotes a combustor. The Nb-silicide based composite according to the present invention may be applied to any of the above components. Particularly, the composite material is preferably applied to the turbine blade 3 (turbine rotor blade and stator blade) exposed to high temperatures.

The above-described Nb-silicide based composite according to the present invention has excellent heat resistance, strength, toughness and ductility and hence, is preferably used as a heat resistant material (high-temperature components) constituting the above-described high-temperature heat engines. Particularly, the composite material is very useful as the heat resistant material usable in various temperature environments.

Examples of the high-temperature heat engine are not limited to the above-described gas turbine for power generation but also include turbine engines, jet engines and the like.

### Embodiments

The mode for carrying out the present invention is described in more detail as below with reference to embodiments thereof. The following preparation method of Nb-silicide based composites according to the embodiments is an example of the preparation method. Therefore, the present invention is not limited to the following embodiments. As a matter of course, the particulars of the present invention can be implemented in various modes. Further, the present invention is not limited to the above embodiments and various changes can be made thereto. Embodiments implemented by properly combining respectively disclosed technical means are also included in the technical scope of the present invention.

Test pieces (TP1 and TP2) made of the Nb-silicide based composite according to the present invention were produced and tested. The followings are the compositions of the test pieces on the basis of the number of atoms, namely, atomic %.
TP1: Nb-16Si-7.5Cr-5Mo-5Hf-10Ti-1W-1B-2.5Zr-2.0Sn
TP2: Nb-16Si-7.5Cr-5Mo-5Hf-15Ti-1W-1B-2.5Zr-2.0Sn

A specific preparation method is as follows. The test material was prepared by a cold crucible melting method (melting step and solidifying step). The subsequent heat treatment was performed in an argon atmosphere with temperatures maintained at 1200°C to 1700°C for 10 to 50 hours.

Here, Cold Crucible Induction Melting (CCIM) was used as the cold crucible melting method. Besides this, the cold crucible melting method also includes Electron Beam Melting (EBM), Plasma Arc Melting (PAM) and the like. Any of these melting methods may be adopted.

A high-temperature compression creep test under 1200°C-137 MPa and a 4-point bending test at room temperatures were performed. The results are shown in Table 1.

**Table 1**

| ALLOY | COMPRESSION CREEP RATE (s⁻¹) 137MPa-1200°C | ROOM-TEMPERATURE FRACTURE TOUGHNESS MPa·m^{1/2} |
|---|---|---|
| TP1 | 2.2.E-07 | 20 |
| TP2 | 3.1.E-07 | 21 |

As shown in Table 1, the Nb-silicide based composites according to the present invention achieve both the excellent strength and toughness. The Nb-silicide based composites having such characteristics are very useful as the heat resistant material. With excellent toughness at room temperatures, such an alloy product can be processed and molded into desired articles using a variety of methods. For example, a product can be manufactured by casting a molten alloy using a suitable apparatus. Such methods and apparatuses are known in the art and do not form part of the present invention. For example, a mold assembly for casting is is set forth in U.S. Patent No. 6,676,381 (Subramanian et. al.). However, many other casting methods may also be used. The molten metal is solidified by a directional solidification (DS) method. The DS method is well known in the art in question and set forth in U.S. Patent No. 6,059,015 and No. 4,213,497 (Sawyer).

As described above, the present invention can provide the Nb-silicide based composites achieving both the mechanical characteristics and the toughness at high levels in the ultrahigh temperature region (1200°C or more), as well as the high-temperature components and high-temperature heat engines using the same.

### Reference Signs List

3: turbine blade, 4: turbine disk, 6: compressor disk, 7: compressor blade, 8: compressor stacking bolt, 9: compressor stub shaft, 10: turbine stub shaft, 11: hole, 13: turbine stacking bolt, 15: combustor, 16: compressor nozzle, 18: turbine spacer, 19: distant piece, 20: first stage nozzle

## Claims

1. A Nb-silicide based composite comprising 13 to 23 at% of Si, 2.0 to 10 at% of Cr, 5.0 to 23 at% of Ti, 0.0 to 6.0 at% of Al, 0.10 to 8.0 at% of Zr, 1.0 to 8.0 at% of Hf, 0.0 to 2.0 at% of W, 0.10 to 6.0 at% of Sn, 3.1 to 8.0 at% of Mo, 0.20 to 5.0 at% of B, and the balance being Nb and inevitable impurities.

2. The Nb-silicide based composite according to Claim 1, wherein the total content of W and Mo is 6.0 to 8.0 at%.

3. The Nb-silicide based composite according to Claim 1, comprising niobium crystal grains, a compound phase containing niobium silicide, and niobium crystal grains dispersed in the compound phase, and including a lamellar structure composed of the niobium silicide and the niobium crystal grains dispersed in the compound phase.

4. The Nb-silicide based composite according to Claim 3, wherein a content of the niobium crystal grains is 35 to 65 vol% and a content of the compound phase is 35 to 65 vol%.

5. The Nb-silicide based composite according to Claim 3, further comprising a precipitated phase, wherein a content of the precipitated phase is 5 vol% or less.

6. The Nb-silicide based composite according to Claim 5, wherein the precipitated phase is a Laves phase or Hf₂Si phase.

7. The Nb-silicide based composite according to Claim 3, wherein the compound phase is dispersed in a network of the niobium crystal grains which are coarse.

8. A high-temperature component employing the Nb-silicide based composite according to any one of Claims 1 to 7.

9. The high-temperature component according to Claim 8, wherein the high-temperature component is a turbine rotor blade for use in gas turbine.

10. The high-temperature component according to Claim 8, wherein the high-temperature component is a turbine stator blade for use in gas turbine.

11. A high-temperature heat engine employing the high-temperature component according to Claim 8.

12. The high-temperature heat engine according to Claim 11, wherein the high-temperature heat engine is a gas turbine.

13. The high-temperature heat engine according to Claim 11, wherein the high-temperature heat engine is a jet engine.

## Patentansprüche

1. Verbundwerkstoff auf Nb-Silizid-Basis, umfassend 13 bis 23 Atom-% Si, 2,0 bis 10 Atom-% Cr, 5,0 bis 23 Atom-% Ti, 0,0 bis 6,0 Atom-% Al, 0,10 bis 8,0 Atom-% Zr, 1,0 bis 8. 0 Atom-% Hf, 0,0 bis 2,0 Atom-% W, 0,10 bis 6,0 Atom-% Sn, 3,1 bis 8,0 Atom-% Mo, 0,20 bis 5,0 Atom-% B, Rest Nb und unvermeidliche Verunreinigungen.

2. Verbundwerkstoff auf Nb-Silizid-Basis nach Anspruch 1, wobei der Gesamtgehalt an W und Mo 6,0 bis 8,0 Atom-% beträgt.

3. Verbundwerkstoff auf Nb-Silizid-Basis nach Anspruch 1, mit Niob-Kristallkörnern, einer Niob-Silizid enthaltenden Verbundphase und in der Verbundphase dispergierten Niob-Kristallkörnern, der eine lamellenartige Struktur aufweist, die aus dem Niob-Silizid und den in der Verbundphase dispergierten Niob-Kristallkörnern besteht.

4. Verbundwerkstoff auf Nb-Silizid-Basis nach Anspruch 3, wobei der Gehalt an Niob-Kristallkörnern 35 bis 65 Vol.-% und der Gehalt an der Verbundphase 35 bis 65 Vol.-% beträgt.

5. Verbundwerkstoff auf Nb-Silizid-Basis nach Anspruch 3, der ferner eine Präzipitatphase umfasst, wobei der Anteil der Präzipitatphase 5 Vol.-% oder weniger beträgt.

6. Verbundmaterial auf Nb-Silizid-Basis nach Anspruch 5, wobei die Präzipitatphase eine Laves-Phase oder Hf₂Si-Phase ist.

7. Verbundwerkstoff auf Nb-Silizid-Basis nach Anspruch 3, wobei die Verbundphase in einem Netzwerk der Niobkristallkörner, die grob sind, dispergiert ist.

8. Hochtemperaturbauteil, bei dem der Verbundwerkstoff auf Nb-Silizid-Basis nach einem der Ansprüche 1 bis 7 verwendet ist.

9. Hochtemperaturbauteil nach Anspruch 8, bei dem das Hochtemperaturbauteil eine Turbinenrotorschaufel zur Verwendung in einer Gasturbine ist.

10. Hochtemperaturbauteil nach Anspruch 8, bei dem das Hochtemperaturbauteil eine Turbinenstatorschaufel zur Verwendung in einer Gasturbine ist.

11. Hochtemperatur-Wärmekraftmaschine bei der das Hochtemperaturbauteil nach Anspruch 8 verwendet ist.

12. Hochtemperatur-Wärmekraftmaschine nach Anspruch 11, wobei es sich bei der Hochtemperatur-Wärmekraftmaschine um eine Gasturbine handelt.

13. Hochtemperatur-Wärmekraftmaschine nach Anspruch 11, wobei es sich bei der Hochtemperatur-Wärmekraftmaschine um ein Strahltriebwerk handelt.

## Revendications

1. Composite à base de siliciure de Nb comprenant 13 à 23 % en atomes de Si, 2,0 à 10 % en atomes de Cr, 5,0 à 23 % en atomes de Ti, 0,0 à 6,0 % en atomes de Al, 0,10 à 8,0 % en atomes de Zr, 1,0 à 8. 0 at% de Hf, 0,0 à 2,0 at% de W, 0,10 à 6,0 at% de Sn, 3,1 à 8,0 at% de Mo, 0,20 à 5,0 at% de B, le reste étant du Nb et des impuretés inévitables.

2. Composite à base de siliciure de Nb selon la revendication 1, dans lequel la teneur totale en W et Mo est de 6,0 à 8,0 % en atomes.

3. Composite à base de siliciure de Nb selon la revendication 1, comprenant des grains de cristaux de niobium, une phase composée contenant du siliciure de niobium, et des grains de cristaux de niobium dispersés dans la phase composée, et comprenant une structure lamellaire composée du siliciure de niobium et des grains de cristaux de niobium dispersés dans la phase composée.

4. Composite à base de siliciure de Nb selon la revendication 3, dans lequel une teneur en grains de cristaux de niobium est de 35 à 65 % en volume et une teneur en phase composée est de 35 à 65 % en volume.

5. Composite à base de siliciure de Nb selon la revendication 3, comprenant en outre une phase précipitée, dans lequel une teneur de la phase précipitée est de 5 % en volume ou moins.

6. Composite à base de siliciure de Nb selon la revendication 5, dans lequel la phase précipitée est une phase de Laves ou une phase de Hf₂Si.

7. Composite à base de siliciure de Nb selon la revendication 3, dans lequel la phase composée est dispersée dans un réseau de grains de cristaux de niobium qui sont gros.

8. Composant à haute température utilisant le composite à base de siliciure de Nb selon l'une quelconque des revendications 1 à 7.

9. Composant à haute température selon la revendication 8, dans lequel le composant à haute température est une aube de rotor de turbine destinée à être utilisée dans une turbine à gaz.

10. Composant à haute température selon la revendication 8, dans lequel le composant à haute température est une aube de stator de turbine destinée à être utilisée dans une turbine à gaz.

11. Un réacteur thermique à haute température utilisant le composant à haute température selon la revendication 8.

12. Le réacteur thermique à haute température selon la revendication 11, dans lequel le réacteur thermique à haute température est une turbine à gaz.

13. Le réacteur thermique à haute température selon la revendication 11, dans lequel le réacteur thermique à haute température est un moteur à réaction.
